## Europäisches Patentamt
## European Patent Office
## Office européen des brevets

(11) Veröffentlichungsnummer: **0 019 908**
**B1**

(12) # EUROPÄISCHE PATENTSCHRIFT

(45) Veröffentlichungstag der Patentschrift:
**18.05.83**

(51) Int. Cl.³: **G 21 C 13/02**

(21) Anmeldenummer: **80102959.6**

(22) Anmeldetag: **28.05.80**

(54) **Durchführung einer Rohrleitung im Bereich einer kugelförmigen Sicherheitshülle eines Kernkraftwerkes.**

(30) Priorität: **29.05.79 DE 2921675**

(43) Veröffentlichungstag der Anmeldung:
**10.12.80 Patentblatt 80/25**

(45) Bekanntmachung des Hinweises auf die Patenterteilung:
**18.05.83 Patentblatt 83/20**

(84) Benannte Vertragsstaaten:
**AT CH FR IT LI**

(56) Entgegenhaltungen:
**BE-A-664 890**
**FR-A-1 384 998**
**FR-A-2 317 736**
**GB-A-1 022 447**
**GB-A-1 088 956**
**US-A-1 490 622**

(73) Patentinhaber: **BROWN BOVERI REAKTOR GmbH,
Dudenstrasse 44, D-6800 Mannheim 1 (DE)**

(72) Erfinder: **Knierriem, Leonhard, Ing.grad.,
Rob.-Koch-Strasse 3, D-6120 Erbach (DE)**

Durchführung einer Rohrleitung im Bereich einer kugelförmigen Sicherheitshülle eines Kernkraftwerkes

Die Erfindung betrifft eine Durchführung einer Rohrleitung im Bereich einer kugelförmigen Sicherheitshülle eines Kernkraftwerkes, wobei in die Wandung der Sicherheitshülle ein Hüllenstutzen und in den Hüllenstutzen ein Rohrstutzen eingeschweisst ist und wobei mit beiden Enden des Rohrstutzens eine Rohrleitung verbunden ist.

Eine derartige Durchführung ist allgemein bekannt. Der Hüllenstutzen dient dabei als Schutzrohr und zur zur Kompensierung von Wärmedehnungen der mitunter ein heisses Medium führenden Rohrleitung, die beidseitig vom Rohrstutzen wegführt und mit diesem verschweisst ist.

Rohrstutzen und Hüllenstutzen sind koaxial angeordnet und durchdringen die Sicherheitshülle in horizontaler Richtung.

Eine derartige Durchführung weist verschiedene Nachteile auf.

Aufgrund der Neigung der Sicherheitshülle ist ein elliptischer Ausschnitt an der Durchführungsstelle erforderlich. Die Folgen sind aufwendige Berechnung und Herstellung des Ausschnittes. Da sich der Öffnungswinkel der erforderlichen Schweissnaht am Umfang des Ausschnittes ständig ändert, ist diese ungleichmässig und schwer herzustellen. Diese Ungleichmässigkeit führt zu Schwierigkeiten bei der zerstörungsfreien Prüfung mittels Ultraschall. Nachdem der Rohrstutzen und die Rohrleitung eingebaut sind, ist die Innenseite des Hüllenstutzens bzw. die Aussenseite der Rohrleitung z.B. zur wiederkehrenden Prüfung der Verbindungsschweissnaht zwischen Rohrstutzen und Rohrleitung nicht oder nur bedingt zugängig.

Die Erfindung stellt sich die Aufgabe, eine einfach herzustellende Durchführung für eine Rohrleitung anzugeben, die einen gleichmässigen Querschnitt der Schweissnahtverbindung zwischen Sicherheitshülle und Hüllenstutzen erlaubt und alle Schweissnähte sowie die Innenseite des Hüllenstutzens einer wiederkehrenden Prüfung zugänglich macht.

Gelöst wird die Aufgabe erfindungsgemäss dadurch, dass der Hüllenstutzen als kugelförmige Teilschale ausgebildet ist, die an ihrem Umfang mit der Wandung der Sicherheitshülle verschweisst ist und dass der Rohrstutzen derart in die Teilschale eingeschweisst ist, dass seine Achse durch den Mittelpunkt dieser Teilschale verläuft.

Sowohl die Durchtrittsöffnung für die Teilschale in der Sicherheitshülle als auch für den Rohrstutzen in der Teilschale sind kreisförmig und lassen sich leicht herstellen. Die Schweissnähte weisen einen gleichmässigen Querschnitt auf und sind ebenso wie die Rohrleitung und die Teilschale zur zerstörungsfreien Prüfung und Besichtigung zugänglich.

Gemäss einer besonderen Ausbildung ist der Rohrstutzen an der Anschweissstelle verstärkt ausgebildet.

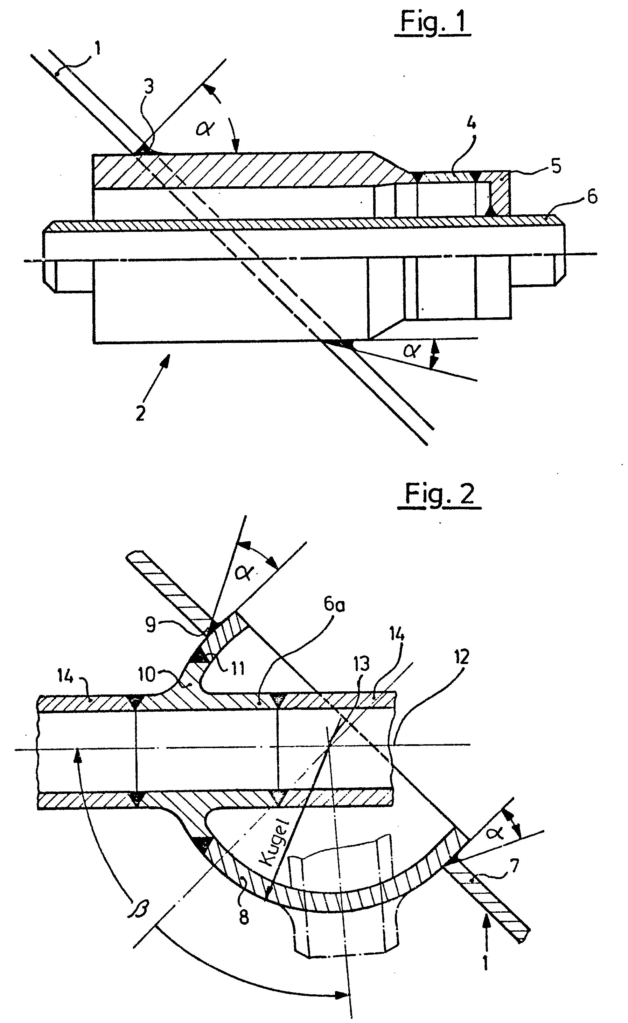

Anhand der Fig. 1 wird eine Durchführung nach dem Stand der Technik und anhand der Fig. 2 die erfindungsgemässe Durchführung erläutert.

Mit 1 ist der Teilbereich einer Sicherheitshülle eines nichtdargestellten Kernkraftwerkes bezeichnet. Ein zylindrischer Hüllenstutzen 2 ist in eine aufgrund der Neigung der Sicherheitshülle elliptische Öffnung eingeschweisst. Die Schweissnähte 3 weisen deshalb einen unterschiedlichen Öffnungswinkel α auf. An seinem verjüngt ausgeführten Ende sind ein Ring 4 und eine Scheibe 5 am Hüllenstutzen angeschweisst. Ein koaxial zum Hüllenstutzen geführter Rohrstutzen 6 ist mit der Scheibe 5 verschweisst.

Die Fig. 2 zeigt die erfindungsgemässe Ausbildung der Durchführung. In die Wandung 7 der Sicherheitshülle 1 ist ein als kugelförmige Teilschale 8 ausgebildeter Hüllenstutzen eingeschweisst. Die Öffnung zur Aufnahme des Hüllenstutzens ist kreisförmig ausgebildet und somit einfach herstellbar. Die Schweissnähte 9 weisen über den ganzen Umfang den gleichen Öffnungswinkel auf. Der Rohrstutzen 6a weist eine ringförmige Verstärkung 10 auf, die in eine kreisförmige Öffnung der Teilschale 8 eingelassen und mittels einer Naht 11 verschweisst ist. Die Achse 12 des Rohrstutzens 6a verläuft dabei durch den Mittelpunkt 13 der Teilschale 8. Mit den Enden des Rohrstutzens ist eine Rohrleitung 14 verbunden. Von Fall zu Fall ist es auch angebracht, anstatt des Rohrstutzens direkt eine einstückige Rohrleitung in den Hüllenstutzen einzuschweissen. Der strichpunktiert eingezeichnete Rohrstutzen soll andeuten, dass über den Winkelbereich β an jeder beliebigen Stelle ein Rohrstutzen in den Hüllenstutzen eingeschweisst werden kann. Die Öffnung im Hüllenstutzen würde immer kreisförmig sein.

Mit der erfindungsgemässen Durchführung wurde eine einfach herzustellende Durchführung geschaffen, deren Schweissnähte gut zugänglich und wiederkehrend prüfbar sind.

**Patentansprüche**

1. Durchführung einer Rohrleitung im Bereich einer kugelförmigen Sicherheitshülle eines Kernkraftwerkes, wobei in die Wandung (7) der Sicherheitshülle ein Hüllenstutzen (8) und in den Hüllenstutzen ein Rohrstutzen (6a) eingeschweisst ist, und wobei mit beiden Enden des Rohrstutzens (6a) die Rohrleitung (14) verbunden ist, dadurch gekennzeichnet, dass der Hüllenstutzen als kugelförmige Teilschale (8) ausgebildet ist, die an ihrem Umfang mit der Wandung (7) der Sicherheitshülle (1) verschweisst ist und dass der Rohrstutzen (6a) derart in die Teilschale (8) eingeschweisst ist, dass seine Achse (12) durch den Mittelpunkt (13) dieser Teilschale verläuft.

2. Durchführung nach Anspruch 1, dadurch gekennzeichnet, dass der Rohrstutzen (6a) an der Anschweissstelle (10) verstärkt ausgebildet ist.

## Claims

1. Piping penetration in the area of the spherical containment for a nuclear power plant, consisting of a sleeve nozzle (8) which is welded into the wall (7) of the containment, and a pipe nozzle (6a) welded into the sleeve nozzle, the associated piping (14) being connected to the two ends of the pipe nozzle (6a), characterized in that the sleeve nozzle is designed as part of a spherical shell (8) welded around its periphery to the wall (7) of the containment (1), and that the pipe nozzle (6a) is welded into the shell part (8) in such a way that its axis (12) passes through the center point (13) of this shell.

2. A piping penetration according to claim 1, characterized in that the pipe nozzle (6a) is reinforced at the weld location (10).

## Revendications

1. Traversée d'une canalisation tubulaire dans la zone d'un confinement de sécurité sphérique d'une centrale nucléaire, un raccord de confinement (8) étant alors soudé dans la paroi (7) du confinement de sécurité et un raccord tubulaire (6a) étant soudé dans le raccord de confinement, et la canalisation tubulaire (14) étant reliée aux deux extrémités du raccord tubulaire (6a), caractérisée en ce que le raccord de confinement est conformé comme une coquille partielle sphérique (8) qui est soudée à sa périphérie à la paroi (7) du confinement de sécurité (1) et en ce que le raccord tubulaire (6a) est soudé de telle manière dans la coquille partielle (8) que son axe passe par le point central (13) de cette coquille partielle.

2. Traversée selon la revendication 1, caractérisée en ce que le raccord tubulaire (6a) est renforcé à l'endroit de soudage (10).

## Fig. 1

## Fig. 2